Europäisches Patentamt

European Patent Office

Office européen des brevets

(19)

(11) Veröffentlichungsnummer: **0 289 658 B1**

(12) # EUROPÄISCHE PATENTSCHRIFT

(45) Veröffentlichungstag der Patentschrift: **08.07.92**

(51) Int. Cl.⁵: **B60S 1/34**

(21) Anmeldenummer: **87117445.4**

(22) Anmeldetag: **26.11.87**

(54) **Wischarm, insbesondere für Scheibenwischeranlagen an Kraftfahrzeugen.**

(30) Priorität: **02.05.87 DE 3714648**

(43) Veröffentlichungstag der Anmeldung:
**09.11.88 Patentblatt 88/45**

(45) Bekanntmachung des Hinweises auf die
Patenterteilung:
**08.07.92 Patentblatt 92/28**

(84) Benannte Vertragsstaaten:
**ES FR GB IT**

(56) Entgegenhaltungen:
**DE-A- 3 433 106**
**DE-B- 1 249 108**
**FR-A- 2 551 406**
**GB-A- 1 230 936**
**GB-A- 2 103 922**

**PATENT ABSTRACTS OF JAPAN vol. 11, no.
356 (M-644)(2803) 20 November 1987, & JP-
A-62 134355 (ICHIKOH) 17 Juni 1987**

(73) Patentinhaber: **SWF Auto-Electric GmbH
Stuttgarter Strasse 119 Postfach 135
W-7120 Bietigheim-Bissingen(DE)**

(72) Erfinder: **Durian, Fritz
Mozartstrasse 8
W-7120 Bietigheim-Bissingen(DE)**
Erfinder: **Prohaska, Hans
Nelkenweg 44
W-7120 Bietigheim-Bissingen(DE)**
Erfinder: **Schmid, Eckhardt
Heilbronner Strasse 62
W-7129 Brackenheim(DE)**

**Beschreibung**

Die Erfindung betrifft einen Wischarm mit den im Oberbegriff des Anspruchs 1 aufgeführten Merkmalen.

Die Wischstangen von Wischarmen werden üblicherweise aus Stahlband gefertigt, das entsprechend der gewünschten Form gebogen wird und in dem als Befestigungsmittel für eine Anpreßdruckfeder ein Durchbruch vorgesehen wird, in den die Feder mit einer Öse eingehängt werden kann (vgl. DE-B-12 49 108). Der Durchbruch wird üblicherweise mittels eines Stanzverfahrens hergestellt. Eine solche Wischstangenausbildung wird gewählt, wenn der Wischarm eine einzige Anpreßdruckfeder besitzen soll. Wenn der Wischarm zwei nebeneinander angeordnete Anpreßdruckfedern besitzen soll, was manchmal gewünscht wird, um eine niedrige Wischarmbauweise erzielen zu können, sind andere Wischarmausbildungen im Federbefestigungsbereich gebräuchlich. So ist für einen Wischarm mit zwei nebeneinander angeordneten Anpreßdruckfedern vorgeschlagen worden, eine mit zwei Durchbrüchen als Einhängemittel für zwei Anpreßdruckfedern versehene Platte an einer Wischstange durch Umschlagen zu befestigen (DE-A-33 31 311 oder FR-A-2 551 406, siehe Figuren 1 bis 5). Weiterhin ist vorgeschlagen worden, einen sich quer durch das Gelenkteil erstreckenden Gelenkniet als Anhängemittel für zwei Anpreßdruckfedern auszugestalten (DE-A-31 32 183 oder GB-A-2 103 922). Die letztgenannten Ausführungsformen sind relativ teuer.

Aus der DE-A-33 31 311 oder FR-A-2 551 406 (siehe Figuren 6 und 7) ist bekannt, die über die Längsschmalseiten der Wischstange überstehenden Haltemittel für die Anpreßdruckfedern einstückig mit der Wischstange herzustellen. Jedes Haltemittel wird dabei von einer etwa um die Wischstangenbreite über eine Längsschmalseite der Wischstange vorspringende Lasche mit einem Durchbruch gebildet, in den eine Anpreßdruckfeder eingehängt ist.

Wie man der DE-OS-33 31 311 (oder FR-A-2 551 406) auch entnehmen kann, ist die Wichstange aus einem Metallband ausgestanzt, dessen Breite dem Abstand der beiden Außenseiten der Laschen voneinander entspricht, das also etwa dreimal so breit wie die Wischstange ist. Dies bedeutet, daß bei der Herstellung einer Wischstange zwei Metallstreifen mit der Breite und der Länge der Wischstange als Abfall entstehen.

Aufgabe der Erfindung ist es, einen Wischarm der eingangs genannten Art zu schaffen, der möglichst kostengünstig gefertigt werden kann und dennoch die an moderne Wischarme gestellten Anforderungen erfüllt.

Diese Aufgabe wird erfindungsgemäß von einem Wischarm gelöst, welcher die im kennzeichnenden Teil des Anspruchs 1 aufgeführten Merkmale aufweist. Die vorgeschlagene einstückige Ausbildung von Wischstange und Haltemitteln ermöglicht eine Fertigung ohne Aufwand von Fremdmaterial, ohne Materialverluste und ohne Montageaufwand für die Haltemittel für die Anpreßdruckfedern.

Wenn das Haltemittel gemäß Anspruch 2 ausgebildet ist, ist eine sichere Befestigung herkömmlicher Anpreßdruckfedern möglich.

Wenn das Haltemittel gemäß Anspruch 4 als Haken ausgebildet ist, ist ohne Hilfsmittel ein lagesicheres Halten der Anpreßdruckfeder möglich.

Die Weiterbildung gemäß Anspruch 5 ermöglicht eine schmale Wischarmbauweise.

Vorteilhafte maßliche Ausgestaltungen von zwei Haken, die eine schmale Wischarmbauweise, eine niedrige Wischarmbauweise und ein problemloses Anhängen der Anpreßdruckfedern ermöglichen und eine gute mecanische Stabilität der Haken gewährleisten, sind in den Ansprüchen 6 bis 12 aufgezeigt. Gemäß der in Anspruch 7 aufgezeigten Variante können die Haken dabei endseitig freistehen. Bei einer genügenden Hakenlänge, die in der Praxis leicht ermittelt werden kann, ist kein unerwünschtes Abgleiten der lose beispielsweise mit einem gekrümmten Ende an den Haken eingehängten Anpreßdruckfedern möglich. Die Haken können aber auch wie in Anspruch 8 aufgezeigt, miteinander verbunden sein. Dann ist noch weniger ein unerwünschtes Abgleiten der Anpreßdruckfedern von den Haken möglich.

Die erstgenannten Haken können besonders problemlos geformt werden, wenn, wie in Anspruch 13 vorgeschlagen, in dem Wischstangenabschnitt ein Bereich fehlen gelassen wird. Diese Maßnahme ermöglicht oder erleichtert den Angriff von Biegewerkzeug(en).

Sowohl für die Variante mit miteinander verbundenen Haken als auch für die Variante mit endseitig freistehenden Haken wird vorgeschlagen, ein Wischarmformstück mit Steg gemäß Anspruch 15 zu verwenden. Der Steg soll dann gemäß Anspruch 16 bzw. 17 Teil der Haken sein.

Dabei kann man derart vorgehen, daß man aus einem bereits in der gewünschten Wischstangenlänge vorliegenden Wischstangenformstück einen derart großen Bereich entfernt oder nicht fertigt, wie er zum Formen einer einzigen Wischstange zugehörigen Haken vorteilhaft ist. Der Bereich kann dabei gemäß Anspruch 14 endseitig offen sein. Dann brauchen nur noch die stehengebliebenen Lappen zu Haken gebogen werden. Wenn der fehlende Bereich durch Entfernen von Material aus dem Wischstangenformstück gebildet werden soll, wird aber die in den Ansprüchen 15 bzw. 16 erwähnte Ausbildung bzw. Bearbeitung vorgeschlagen. Diese bedingt einen geringeren Materialabfall als die in Anspruch 14 aufgeführte Variante.

Bei Wischstangenformstücken mit Steg kann man andererseits gemäß Anspruch 19 vorgehen, indem aus einem länger als eine einzige Wischstange gestalteten Wischstangenformstück an verschiedenen Stellen seiner Längenausdehnung jeweils ein Bereich von einer derartigen Größe entfernt oder nicht gefertigt wird, der in Formstücklängsrichtung etwa doppelt so groß ist wie die eventuell noch zu formenden Haken, die dann einer einzigen Wischstange zugehören und das Formstück danach bei den Bereichen teilt. Auf diese Weise hat man gleichzeitig mehrere Wischstangenendbereiche zur Weiterbearbeitung vorliegen. Dieses Verfahren ist besonders rationell. Für die Variante nach Anspruch 7 muß dabei selbstverständlich jeder ausgesparte Bereich mittig der Längserstreckung quergeteilt werden und für die Variante nach Anspruch 8 jeder Steg mittig entlang der Längserstreckung.

Als Formverfahren wird das Kaltformverfahren vorgeschlagen.

Weitere vorteilhafte Einzelheiten und Ausgestaltungen der Erfindung sind aus den übrigen Unteransprüchen sowie aus der nachfolgend erläuterten Zeichnung ersichtlich, die Ausführungsbeispiele zeigt.

Dabei ist dargestellt in

Fig. 1      ein Abschnitt eines ersten Wischarms in Ansicht von unten, in

Fig. 2      ein Schnitt entlang der Linie II-II in Fig. 1 durch die Wischstange, in den

Fig. 3 bis 5      drei verschiedene Wischstangenformstücke, aus denen die Wischstange des in Fig. 1 dargestellten Wischarms hergestellt werden kann, in

Fig. 6      ein Abschnitt einer zweiten Wischstange mit daran befestigten Anpreßdruckfedern in Ansicht von unten und in

Fig. 7      der Wischstangenabschnitt nach Fig. 6 in Seitenansicht.

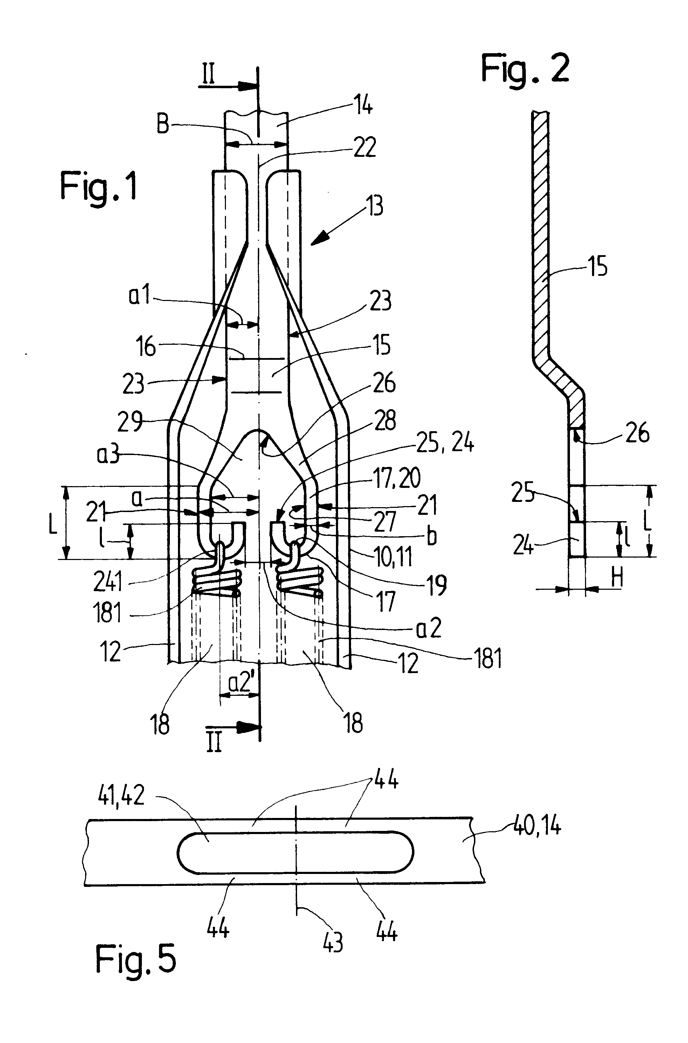

Der in Fig. 1 vergrößert dargestellte Wischarm besitzt ein im Querschnitt U-formiges Gelenkteil 10, das einen Rücken 11 und zwei Seitenwangen 12 aufweist. Das Gelenkteil 10 ist an seinem nicht dargestellten hinteren Ende, das in Fig. 1 unten liegen würde, über ein Befestigungteil mit einer Wischerwelle verbindbar. Mit seinem vorderen Ende 13 umgreift es formschlüssig eine im Querschnitt rechteckige Wischstange 14, die mit ihrem hinteren Ende 15, das bei 16 nach unten abgeknickt ist, ein Stück in das Gelenkteilinnere ragt. Die Wischstange 14 ist einstückig mit zwei Haltemitteln 17, die als von dem Wischstangenabschnitt 15 abstehende Teile, nämlich als Haken, ausgebildet sind, für zwei als Zugfedern ausgebildete Anpreßdruckfedern 18 hergestellt. Die Anpreßdruckfedern 18 erstrecken sich nebeneinander im Gelenkteilinnern, umgreifen mit jeweils einer sich mittig in Federlängsrichtung erstreckenden Öse 19 einen Haken 17 und sind mit ihrem nicht dargestellten hinteren Ende am Befestigungsteil befestigbar.

Die Verwendung zweier sich nebeneinander erstreckender Anpreßdruckfedern gewährleistet dabei eine niedrige Wischarmbauweise im Gelenkteilbereich. Aufgrund von deren nachfolgend näher beschriebenen Befestigung an dem Wischstangenabschnitt 15 ist zudem eine schmale Wischarmbauweise im Gelenkteilbereich gewährleistet. Wie die Fig. 1 und 2 zeigen, sind die Haken 17 in Draufsicht U-förmig und stehen in Wischstangenlängsrichtung von dem Wischstangenabschnitt 15 ab. In dem von einem gerade in Wischstangenlängsrichtung verlaufenden Schenkel 20 gebildeten Angrenzungsbereich an den Wischstangenabschnitt 15 verlaufen die Haken 17 mit ihren am weitesten entfernt voneinander verlaufenden Flächen 21 jeweils in einem Abstand a zu einer sich in Wischstangenlängsrichtung erstreckenden geometrischen Achse 22, die hier mit der Symmetrieachse identisch ist, welcher etwa doppelt so groß ist wie der Abstand al, den die zwei sich gerade in Wischstangenlängsrichtung erstreckenden Längsschmalseiten 23 des im Querschnitt rechteckigen Wischstangenabschnitts 15 jeweils von dieser Achse 22 besitzen. Die Haken 17 besitzen endseitig freistehende Schenkel 24, die in einem Abstand a2 zueinander verlaufen, der kleiner ist als der Abstand al, den die Längsschmalseiten 23 des Wischstangenabschnitts 15 von der Achse 22 besitzen. Der Abstand a2 ist dabei etwa ein Drittel so groß wie die Breite B des Wischstangenabschnitts 15. Die beiden Anpreßdruckfedern können dadurch, wie in Fig. 1 gezeigt, sehr nahe nebeneinander verlaufen, wodurch die gezeigte schmale Wischarmbauweise möglich ist. Speziell halten hier die Haken 17 mit ihrem Krümmungsbereich 241 die Anpreßdruckfedern 18 an deren ösen 19 derart, daß diese jeweils in einem Abstand a2' zu der Achse 22 verlaufen, der etwa so groß ist wie der Abstand al , den die Längsschmalseiten 23 des Wischstangenabschnitts 15 jeweils von der Achse 22 besitzen. Wie die Fig. 1 weiter zeigt, verlaufen die am weitesten entfernt voneinander verlaufenden Flächen 181 der Anpreßdruckfedern 18 lediglich geringfügig weiter entfernt von der Achse 22 als die Flächen 21 der Haken 17.

Die Haken 17 sind im Querschnitt rechteckig und besitzen quer zur Achse 22 eine Ausdehnung b, d.h. eine Breite b, welche etwa ein Viertel so groß ist wie die Breite B des Wischstangenabschnitts 15. In Richtung der Achse 22, d.h. in Wischstangenlängsrichtung, wären sie im ungekrümmten Zustand, wie Fig. 1 und 2 entnehmbar ist, etwa zehn mal so groß, d.h. etwa zehn mal so lang, wie breit. Im fertigen Zustand besitzen die Haken 17 bis zum Krümmungsbereich 241 eine Länge L, die etwa sechsmal so groß ist wie deren Breite b und die Schenkel 24 der Haken 17 besitzen in Wischstangenlängsrichtung eine Ausdehnung 1, d.h.eine Länge 1, die etwa halb so groß ist wie die Länge L des Hakens 17. Weiter besitzen sie, wie die Fig. 2 zeigt, eine dem Wischstangenabschnitt 15 und damit der Wischstange 14 gleiche Höhe H. Diese Abmessungen tragen zu ihrer mechanischen Stabilität, insbesondere zu ihrer Bruchstabilität bei.

Wie die Fig. 1 und 2 weiter zeigen, verlaufen die endseitigen Flächen 25 der Schenkel 24 der Haken 17 zur Endfläche 26 des Wischstangenabschnitts 15 etwa gegenüberliegend. Insgesamt ist somit sicher, daß die Anpreßdruckfedern 18 nicht ungewollt von den Haken 17 abrutschen können.

In dem von jeweils einem gerade in Wischstangenlängsrichtung verlaufenden Schenkel 20 gebildeten Angrenzungsbereich an den Wischstangenabschnitt 15 verlaufen die Haken 17 mit ihren einander gegenüberliegenden Flächen 27 jeweils in einem Abstand a3 zur Achse 22, welcher knapp doppelt so groß ist (nämlich so groß wie das um das Maß b verminderte Maß a) wie der Abstand al jeder Längsschmalseite 23 des Wischstangenabschnitts 15 zu der Achse 22. Dies und das zuvorbeschriebene Längenverhältnis der Hakenenden 24 zur gesamten Länge der Haken 17 und die zuvor angedeutete latsache, daß der Wischstangenabschnitt 15 bei 16 nach unten abgeknickt ist und er und die Haken 17 demgemäß auf Abstand zum Rücken 11 des Gelenkteils 10 verlaufen, ermöglicht ein problemloses Anhängen der Anpreßdruckfedern 18 an die Haken 17.

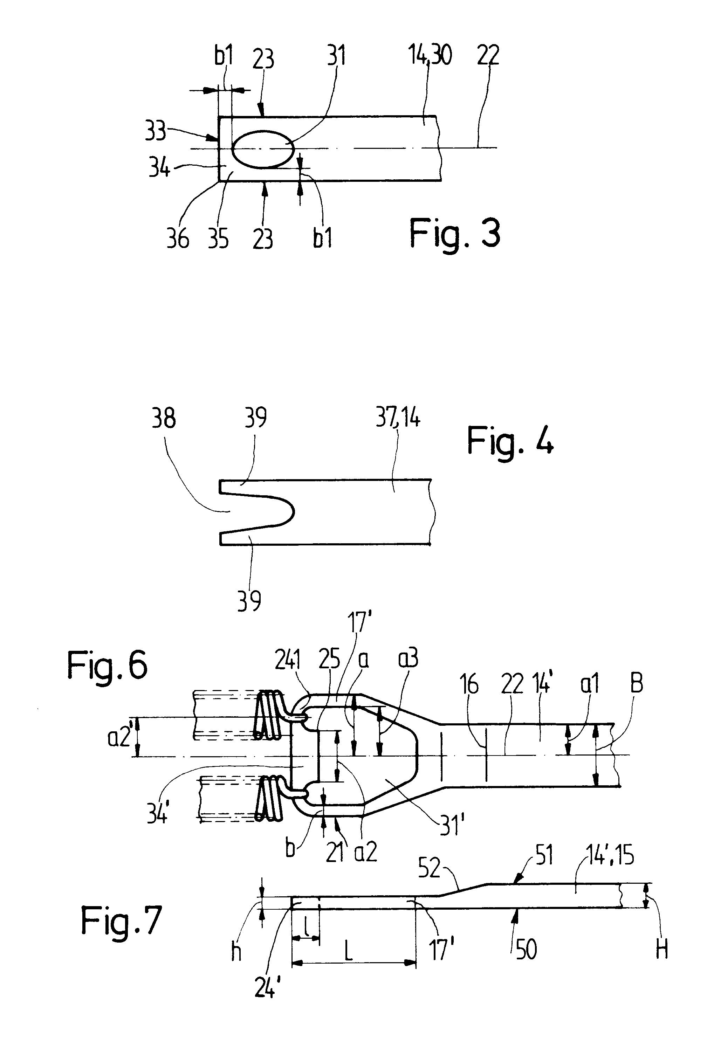

Wie die Fig. 1 weiter zeigt, werden die Schenkel 20 der Haken 17 von zwei Seitenflanken 28 des Wischstangenabschnitts 15 gehalten. Die Seitenflanken 28 erstrecken sich von der Achse 22 weg und halten die Schenkel 20 der Haken 17 in dem zuvor beschriebenen Abstand a bzw. a3. Dabei besitzen die Seltenflanken 28 etwa die gleiche Breite wie die Haken 17. Demgemäß fehlt aus dem Wischstangenabschnitt 15 ein in Draufsicht etwa dreieckiger Bereich 29, der mit einer Spitze auf der Achse 22 liegt. Das kommt daher, weil die Wischstange 14 samt den Haken 17 aus einem in Fig. 3 (nicht im gleichen Maßstab wie in Fig. 1) gezeigten Federstahlband 30 hergestellt worden ist. Und zwar ist aus dem entsprechend der gewünschten Wischstangenlänge zugeschnittenen Stück Federstahlband 30 ein ovales Langloch 31 ausgestanzt worden, das sowohl von den Längsschmalseiten 23 als auch von der Endfläche 33 den gleichen Abstand bl besitzt, welcher geringfügig größer als die Breite b der Haken 17 ist. Nach dem Ausstanzen des Langloches 31 ist der sich quer zu der in Bandlängsrichtung verlaufenden Achse 22, welche mit der in Fig. 1 anhand des fertigen Wischarms beschriebenen Achse 22 identisch ist, erstreckende Steg 34 entlang dieser Achse 22 geschlitzt worden. Die so gebildeten, etwa L-förmigen Lappen 35 sind an dem dem Schlitz fernen Ende anschließend seitwärts nach außen von der Achse 22 weggebogen worden, so daß der Wischstangenabschnitt 15 die zwei nach außen weisenden Seitenflanken 28 besitzt. Gleichzeitig oder anschließend sind aus den Lappen 35 die Haken 17 mit den geraden Schenkeln 20, 24 und der Krümmung 241 gebogen worden, wobei dafür gesorgt wurde, daß die Ecken 36 des Wischstangenformstücks 30 gerundet wurden, so daß sich der in den Fig. 1 gezeigte gerundete, formschöne und keine Verletzungsgefahr bergende übergang zwischen den Flanken 28 und den Schenkeln 20 ergab. Insgesamt betrachtet sind somit die Haken 17 auf relativ einfache Weise aus dem Wischstangenmaterial hergestellt worden. Die genannte Materialwahl trägt ebenso zur mechanischen Stabilität der Haken 17 bei, wie deren zuvor beschriebene Gestalt. Weiterhin trägt zu deren Stabilität bei, daß sie nur mittels Kaltformverfahren hergestellt worden sind, welche bekanntermaßen eine Materialverfestigung mit sich bringen.

In Fig. 4 ist ein zweites Federstahlband 37 gezeigt, aus dem die in Fig. 1 gezeigte Wischstange 14 prinzipiell hätte gefertigt werden können. Aus diesem Federstahlband 37 ist ein endseitig offener Bereich 38 ausgestanzt worden. Die seitlich stehengebliebenen Lappen 39 hätten zu den in Fig. 1 gezeigten Flanken 28 und den Haken 17 mit den geraden Schenkeln 20 und 24 und der Krümmung 241 gebogen werden können. Der Bereich 38 muß, um die gewünschte Hakenlänge erzielen zu können, länger als das in Fig. 3 gezeigte Langloch 31 sein. Demgemäß ist bei der Variante nach Fig. 4 ein größerer Materialabfall gegeben.

In Fig. 5 ist ein drittes Federstahlband 40 gezeigt, aus dem die in Fig. 1 gezeigte Wischstange 14 prinzipiell hätte gefertigt werden können. Aus diesem Federstahlband 40 ist an mehreren Stellen, von denen in Fig. 5 eine gezeigt ist, die mit den Bezugszeichen 41 gekennzeichnet ist, ein ovales Langloch 42 ausgestanzt worden, das mehr als doppelt so lang ist, wie die in Fig. 1 gezeigten Haken 17 lang sind. Wenn man dieses Federstahlband 40 jeweils bei 43, d.h. mittig der Längserstreckung des Langlochs 42, querteilt, hat man gleichzeitig mehrere Wischstangen zur Weiterbearbeitung vorliegen. Die jeweils stehengebliebenen Lappen 44 kann man zu den in Fig. 1 gezeigten Flanken 28 und Haken 17 mit den geraden Schenkeln 20 und den U-Enden 24 biegen. Dieses Verfahren ist sehr rationell und kommt deshalb besonders für eine Serienfertigung in Betracht.

Es sei noch darauf hingewiesen, daß die Schenkel 20 der Haken 17 selbstverständlich nicht unbedingt, wie in Fig. 1 gezeigt, gerade in Wischstangenlängsrichtung bzw. parallel zur Achse 22 verlaufen müssen. Sie können auch etwa halbkreisförmig sein. Wenn sie jedoch gerade verlaufen, ist eine besonders schmale Wischstangenbauweise gewährleistet und damit eine besonders schmale Wischarmbauweise möglich. Außerdem ermöglichen die geraden Schenkel 20, daß sich dort ein Biegewerkzeug großflächig abstützen kann, mit dem die Krümmungen 241 und die Schenkel 24 gebogen werden sollen. Wenn keine schmale Wischarmbauweise erforderlich ist, können die Hakenenden auch entgegengesetzt wie in Fig. 1 gezeigt verlaufen.

In den Fig. 6 und 7 ist eine zweite Wischstange 14' mit zwei Haken 17' als Befestigungsmittel für zwei Anpreßdruckfedern 18 gezeigt. Bei dieser Wischstange 14' sind die Schenkel 24' der Haken 17' durch einen Steg 34' miteinander verbunden. Der Steg 34' erstreckt sich über die gesamte Länge 1 der Schenkel 24', die hier weniger lang als die Schenkel 24 der Haken 17 sind, die die zuvor anhand der Fig. 1 und 2 beschriebene Wischstange 14 besitzt. Die Schenkel 24' können hier weniger lang als die Schenkel 24 sein, weil der Steg 34' verhindert, daß sich die Anpreßdruckfedern über die endseitigen Flächen 25 der Schenkel 24' hinaus in Richtung Wischstangenmitte bzw. -achse 22 bewegen und auf diese Weise von den Haken gleiten könnten.

Diese Wischstange 14' ist aus einem nicht dargestellten Stück Federstahlband gefertigt worden, das dem in Fig. 3 gezeigten Federstahlbandstück 30 mit ausgestanztem Loch 31 weitestgehend entsprach. Das Loch 31' besaß hier aber keine ovale Gestalt, die anschließend verändert wurde, sondern bereits die endgültige, in Fig. 6 gezeigte, im wesentlichen trapezförmige Gestalt, wobei das Trapez im Bereich des Steges 34' am breitesten und im Angrenzungsbereich zu dem Wischstangenabschnitt 15 am schmalsten ist. Nach dem Ausstanzen des Loches 31' ist das Federstahlbandstück hier im Endbereich von einer Höhe H auf eine Höhe h flachgeschlagen worden. Die Höhe h ist hier etwa halb so groß wie die Höhe H. Beim Flachschlagen wurde das Federstahlbandstück entlang einer Längsfläche abgestützt. Die Haken 17' verlaufen somit in einer Ebene mit einer Längsfläche 50 der Wischstange 14'. Die andere Längsfläche 51 der Wischstange 14' verläuft über eine Schräge 52 zu den Haken 17'.

Es ist vorgesehen, daß die Wischstange 14' mit der Längsfläche 51 dem Rücken eines Wischarmgelenkteils benachbart angeordnet wird. Dann können die Anpreßdruckfedern 18 problemlos an die Haken 17' angehängt werden, weil zwischen dem Gelenkteilrücken und den gegenüber dem daran angrenzenden Wischstangenabschnitt 15 abgeflachten Haken 17' ein Freiraum vorhanden ist. Wie aus vorstehendem ersichtlich ist, ist der Freiraum kleiner als bei der in Fig. 2 dargestellten Ausführungsform. Demgemäß kann ein unter Verwendung der Wischstange 14' zu bauender Wischarm im Gelenkteilbereich besonders niedrig gestaltet werden.

Im übrigen sind die Haken 17' und die Wischstange 14' weitestgehend wie die in den Fig. 1 und 2 gezeigte Ausführungsform gestaltet. Demgemäß sind in den Fig. 6 und 7 die Teile gleich wie in Fig. 1 und 2 bezeichnet und bemaßt. Auf ihre Erläuterung wird demgemäß an dieser Stelle verzichtet.

**Patentansprüche**

1. Wischarm, insbesondere für Scheibenwischeranlagen an Kraftfahrzeugen, mit einem Gelenkteil (10), mit einer Wischstange (14, 14'), die zwei Längsschmalseiten (23) aufweist und von einem ihrer Breite (B) von Längsschmalseite (23) zu Längsschmalseite (23) entsprechenden Metallband abgeschnitten ist, und mit wenigstens zwei Anpreßdruckfedern (18), die jeweils über Haltemittel (17, 17') an der Wischstange (14, 14') eingehängt sind, wobei die Haltemittel (17, 17') über die Längsschmalseiten (23) der Wischstange (14, 14') überstehen, dadurch gekennzeichnet, daß die Haltemittel einstückig mit der Wischstange (14, 14') durch Kaltverformung hergestellt sind.

2. Wischarm nach Anspruch 1, dadurch gekennzeichnet, daß die Haltemittel (17) etwa so hoch sind, wie die Wischstange (14).

3. Wischarm nach Anspruch 1, dadurch gekennzeichnet, daß die Haltemittel (17') weniger hoch sind als die Wischstange (14').

4. Wischarm nach Anspruch 1, 2 oder 3, dadurch gekennzeichnet, daß die Haltemittel (17, 17') als Haken ausgebildet sind.

5. Wischarm nach einem vorhergehenden Anspruch, dadurch gekennzeichnet, daß die Haltemittel (17, 17') die Anpreßdruckfedern (18) in einem Abstand (a2') zu einer geometrischen Achse (22), die sich in Wischstangenlängsrichtung erstreckt, halten, der kleiner, gleich oder allenfalls geringfügig größer ist als der Abstand (a1), den die Längsschmalseiten (23) der Wischstange (14, 14') jeweils von dieser Achse (22) besitzen.

**6.** Wischarm nach Anspruch 4 und 5, dadurch gekennzeichnet, daß die zwei Haken (17, 17') zwei nebeneinander verlaufende Schenkel (24, 24') besitzen, die quer zur geometrischen Achse (22) einen Abstand (a2) voneinander haben, welcher etwa ein Drittel so groß ist, wie die Ausdehnung (B) der Wischstange (14, 14') quer zur geometrischen Achse (22).

**7.** Wischarm nach Anspruch 6, dadurch gekennzeichnet, daß die Schenkel (24) frei stehen.

**8.** Wischarm nach Anspruch 6, dadurch gekennzeichnet, daß die Schenkel (24') miteinander verbunden sind.

**9.** Wischarm nach einem der Ansprüche 5 bis 8, dadurch gekennzeichnet, daß jeder Haken (17, 17') quer zur geometrischen Achse (22) eine Ausdehnung (= Breite) (b) besitzt, welche etwa ein Viertel so groß ist, wie die Ausdehnung (8) der Wischstange (14, 14') quer zur geometrischen Achse (22).

**10.** Wischarm nach einem der Ansprüche 5 bis 9, dadurch gekennzeichnet, daß jeder Haken (17, 17') in Wischstangenlängsrichtung etwa sechs mal so groß wie quer dazu ist und daß die Schenkel (24, 24') der Haken (17, 17') in Wischstangenlängsrichtung etwa halb so groß wie die gesamten Haken (17, 17') sind.

**11.** Wischarm nach einem der Ansprüche 6 bis 10, dadurch gekennzeichnet, daß jeder Haken (17, 17') in seinem Angrenzungsbereich (20) an die Wischstange (14, 14') mit einer sich in Wischstangenlängsrichtung erstreckenden Fläche (27) in einem Abstand (a3) zu der geometrischen Achse (22) verläuft, der geringfügig größer ist als der Abstand (a1), den die zwei Längsschmalseiten (23) der Wischstange (14, 14') jeweils von der Achse (22) besitzen und daß die endseitige Fläche (25) jedes Hakens (17, 17') etwa der Endfläche (26) der Wischstange (14, 14') gegenüberliegend verläuft.

**12.** Wischarm nach Anspruch 11, dadurch gekennzeichnet, daß die am weitesten entfernt voneinander verlaufenden Flächen (21) der Haken (17, 17') quer zu der geometrischen Achse (22) einen Abstand (a) von dieser besitzen, welcher etwa doppelt so groß ist wie der Abstand (a1), den die Längsschmalseiten (23) der Wischstange (14, 14') jeweils quer zur geometrischen Achse (22) besitzen.

**13.** Wischarm nach Anspruch 11 oder 12, dadurch gekennzeichnet, daß im Angrenzungsbereich (20) der Haken (17, 17') an die Wischstange (14, 14') aus dieser ein Bereich (29) fehlt.

**14.** Wischarm nach wenigstens einem der Ansprüche 7 bis 13, dadurch gekennzeichnet, daß daß ein endseitig offener Bereich (38) aus einem Wischstangenformstück (37) entfernt oder nicht gefertigt wurde und daß die stehengebliebenen Lappen (39) zu Haken (17) gebogen worden sind.

**15.** Wischarm nach wenigstens einem der Ansprüche 6 bis 13, dadurch gekennzeichnet, daß ein Bereich (31, 31') aus einem Wischstangenformstück (30) derart entfernt wurde, daß ein sich quer zur Wischstangenlängsrichtung erstreckender Steg (34, 34') stehenblieb.

**16.** Wischarm nach Anspruch 15, dadurch gekennzeichnet, daß der Steg (34) zunächst geschlitzt und dann in Hakenform gebogen worden ist.

**17.** Wischarm nach Anspruch 8 und 15, dadurch gekennzeichnet, daß der Steg (34') die Schenkel (24') der Haken (17') miteinander verbindet.

**18.** Wischarm nach Anspruch 17, dadurch gekennzeichnet, daß sich der Steg (34') über die gesamte Länge (1) der Schenkel (24') erstreckt.

**19.** Wischarm nach wenigstens einem der Ansprüche 6 bis 16, dadurch gekennzeichnet, daß aus einem Wischstangenformstück (40) wenigstens ein Bereich (42) entfernt wurde, welcher in Wischstangenlängsrichtung etwa doppelt so groß ist, wie die Haken (17) lang sein sollen und daß das Formstück (40) danach bei dem (den) Bereich(en) (42) geteilt wurde.

**20.** Wischarm nach einem vorhergehenden Anspruch, dadurch gekennzeichnet, daß das Metallband ein Stahlband ist.

**21.** Wischarm nach Anspruch 11 und einem der Ansprüche 10 bis 20, dadurch gekennzeichnet, daß der Bereich (29, 31, 31', 38, 42) durch Ausstanzen entfernt worden ist.

**Claims**

**1.** A wiper arm, especially for wiper systems of motor vehicles, with a joint member (10), with a wiper rod (14, 14') which comprises two long narrow sides (23) and which is cut off from a metal blank of its width (B) from the long narrow side (23) to the long narrow side (23), and with at least two pressure springs (18) which are mounted onto the wiper rod (14, 14') via holding means (17, 17'), whereby the holding means (17, 17') extend the long narrow sides (23) of the wiper rod (14, 14'), wherein the holding means are integrally produced with the wiper rod (14, 14') by cold forming.

2. A wiper arm according to claim 1, wherein the holding means (17) are about of the same height as the wiper rod (14).

3. A wiper arm according to claim 1, wherein the holding means (17') are less high than the wiper rod (14').

4. A wiper arm according to claim 1, 2 or 3, wherein the holding means (17, 17') are formed as hooks.

5. A wiper arm according to one of the preceding claims, wherein the holding means (17, 17') keep the pressure springs (18) at a distance (a2') from a geometrical axis (22) extending in the longitudinal direction of the wiper rod, which distance (a2') is smaller, the same or at best slightly bigger than the distance (al) of the long narrow sides (23) of the wiper rod (14, 14') from this axis (22).

6. A wiper arm according to claim 4 and 5, wherein the two hooks (17, 17') comprise two legs (24, 24') running beside each other, which legs (24, 24') - crosswise to the geometrical axis (22) - are of a distance (a2) to each other, which distance (a2) is about a third of the extension (B) of the wiper rod (14, 14') crosswise to the geometrical axis (22).

7. A wiper arm according to claim 6, wherein the legs (24) stand free.

8. A wiper arm according to claim 6, wherein the legs (24') are linked to each other.

9. A wiper arm according to one of the claims 5 to 8, wherein each hook (17, 17') has an extension (width) (b) crosswise to the geometrical axis (22), which extension is about a quarter of the extension (B) of the wiper rod (14, 14') crosswise to the geometrical axis (22).

10. A wiper arm according to one of the claims 5 to 9, wherein each hook (17, 17') is about six times as big in longitudinal direction of the wiper rod as crosswise to it and wherein the legs (24, 24') of the hooks (17, 17') are about half as big as the whole hooks (17, 17') in longitudinal direction of the wiper rod.

11. A wiper arm according to one of the claims 6 to 10, wherein each hook (17, 17') - in its border area (20) to the wiper rod (14, 14') - extends by way of a surface (27) ranging in longitudinal direction of the wiper rod at a distance (a3) from the geometrical axis (22), which distance (a3) is slightly bigger than the distance (a1) of the two long narrow sides (23) of the wiper rod (14, 14') each from the axis (22) and wherein the end of the surface (25) of each hook (17, 17') extends about to the opposite direction of the end of the surface (26) of the wiper rod (14, 14').

12. A wiper arm according to claim 11, wherein the surfaces (21) of the hooks (17, 17') which are the most distant from each other are - crosswise to the geometrical axis (22) - of a distance (a) from said geometrical axis (22), which is about twice as big as the distance (a1) of the long narrow sides (23) of the wiper rod (14, 14') each crosswise to the geometrical axis (22).

13. A wiper arm according to claim 11 or 12, wherein in the border area (20) of the hooks (17, 17') to the wiper rod (14, 14') an area (29) of said wiper rod (14, 14') is missing.

14. A wiper arm according to at least one of the claims 7 to 13, wherein area (38), which is open at its end, was removed from a wiper rod form piece (37) or was not produced, and wherein the tabs (39) left were bent in the shape of hooks (17).

15. A wiper arm according to at least one of the claims 6 to 13, wherein an area (31, 31') was removed from a wiper rod form piece (30) in such a way that a web (34, 34') extending crosswise to the longitudinal direction of the wiper rod has been left.

16. A wiper arm according to claim 15, wherein at first the web (34) has been slotted and then bent in the shape of a hook.

17. A wiper arm according to claim 8 and 15, wherein the web (34') links the legs (24') of the hooks (17') with each other.

18. A wiper arm according to claim 17, wherein the web (34') extends along the whole length (1) of the legs (24').

19. A wiper arm according to at least one of the claims 6 to 16, wherein at least an area (42) was removed from a wiper rod form piece, which area (42) in the longitdinal direction of the wiper rod is about twice as big as the length of the hooks (17) should be and wherein the form piece (40) was divided at the area(s) (42) afterwards.

20. A wiper rod according to one of the preceding claims, wherein the metal blank is a steel blank.

21. A wiper arm according to claim 11 and one of the claims 10 to 20, wherein the area (29, 31, 31', 38, 42) was removed by punching it out.

**Revendications**

1. Bras d'essuie-glace, notamment pour des systèmes essuie-glace de véhicules automobiles, comprenant une partie articulée (10), une tige d'essuie-glace (14, 14') présentant deux côtés étroits longitudinaux (23) et obtenue en coupant un feuillard correspondant à sa largeur (B) d'un côté étroit longitudinal (23) à l'autre, et au moins deux ressorts de pression d'application (18) accrochés à la tige d'essuie-glace (14, 14') par l'intermédiaire de moyens de retenue respectifs (17, 17'), les moyens de retenue (17, 17') dépassant des côtés étroits longitudinaux (23) de la tige d'essuie-glace (14, 14'), **caractérisé** en ce que les moyens de retenue sont réalisés d'une seule pièce avec la tige d'essuie-glace (14, 14'), par déformation à froid,

2. Bras d'essuie-glace selon la revendication 1, caractérisé en ce que les moyens de retenue (17) ont approximativement la même hauteur que la tige d'essuie-glace (14).

3. Bras d'essuie-glace selon la revendication 1, caractérisé en ce que les moyens de retenue (17') sont moins hauts que la tige d'essuieglace (14').

4. Bras d'essuie-glace selon la revendication 1, 2 ou 3, caractérisé en ce que les moyens de retenue (17, 17') sont configurés en crochets.

5. Bras d'essuie-glace selon l'une des revendications précédentes, caractérisé en ce que les moyens de retenue (17, 17') maintiennent les ressorts de pression d'application (18) à une distance (a2'), d'un axe géométrique (22) s'étendant dans la direction longitudinale de la tige d'essuie-glace, qui est inférieure, égale ou éventuellement légèrement supérieure à la distance (a1) entre cet axe (22) et chacun des côtés étroits longitudinaux (23) de la tige d'essuie-glace (14, 14').

6. Bras d'essuie-glace selon les revendications 4 et 5, caractérisé en ce que les deux crochets (17, 17') possèdent deux branches (24, 24'), qui s'étendent côte à côte et présentent, transversalement à l'axe géométrique (22), une distance mutuelle (a2) qui est égale à environ un tiers de l'étendue (B) de la tige d'essuie-glace (14, 14') transversalement à l'axe géométrique (22).

7. Bras d'essuie-glace selon la revendication 6, caractérisé en ce que les branches (24) sont libres.

8. Bras d'essuie-glace selon la revendication 6, caractérisé en ce que les branches (24') sont mutuellement reliées.

9. Bras d'essuie-glace selon l'une des revendications 5 à 8, caractérisé en ce que chaque crochet (17, 17') possède, transversalement à l'axe géométrique (22), une étendue (b) (= largeur) qui est égale à environ un quart de l'étendue (B) de la tige d'essuie-glace (14, 14') transversalement à l'axe géométrique (22).

10. Bras d'essuie-glace selon l'une des revendications 5 à 9, caractérisé en ce que chaque crochet (17, 17') est approximativement six fois plus grand dans la direction longitudinale de la tige d'essuie-glace qu'en direction transversale, et en ce que les branches (24, 24') des crochets (17, 17') présentent, dans la direction longitudinale de la tige d'essuie-glace, une dimension approximativement égale à la moitié de celle de l'ensemble du crochet (17, 17').

11. Bras d'essuie-glace selon l'une des revendications 6 à 10, caractérisé en ce que, dans sa région (20) de réunion à la tige d'essuieglace (14, 14'), chaque crochet (17, 17') s'étend, par une face (27) se développant dans la direction longitudinale de la tige d'essuie-glace, à une distance (a3) de l'axe géométrique (22) qui est légèrement supérieure à la distance (a1) entre cet axe (22) et chacun des deux côtés étroits longitudinaux (23) de la tige d'essuie-glace (14, 14'), et en ce que la face terminale (25) de chaque crochet (17, 17') s'étend approximativement en vis-à-vis de la face terminale (26) de la tige d'essuieglace (14, 14').

12. Bras d'essuie-glace selon la revendication 11, caractérisé en ce que les faces (21) des crochets (17, 17') qui sont les plus éloignées l'une de l'autre présentent, transversalement à l'axe géométrique (22), une distance (a) de cet axe qui est égale approximativement au double de la distance (a1) entre cet axe géométrique (22) et chacun des côtés étroits longitudinaux (23) de la tige d'essuie-glace (14, 14').

13. Bras d'essuie-glace selon la revendication 11 ou 12, caractérisé en ce que, dans la région (20) de réunion des crochets (17, 17') à la tige d'essuie-glace (14, 14'), une partie (29) de cette dernière est manquante.

14. Bras d'essuie-glace selon au moins l'une des revendications 7 à 13, caractérisé en ce qu'une région (38), ouverte à son extrémité, a été enlevée d'une pièce façonnée de tige d'essuie-glace (37), ou n'a pas été fabriquée, et en ce que les pattes résiduelles (39) ont été recourbées en crochets (17).

15. Bras d'essuie-glace selon au moins l'une des revendications 6 à 13, caractérisé en ce qu'une région (31, 31') a été enlevée d'une pièce façonnée de tige d'essuie-glace (30) de telle sorte qu'est restée une nervure (34, 34'), s'étendant transversalement à la direction longitudinale de la tige d'essuie-glace.

16. Bras d'essuie-glace selon la revendication 15, caractérisé en ce que la nervure (34) a été fendue puis recourbée en crochets.

17. Bras d'essuie-glace selon les revendications 8 et 15, caractérisé en ce que la nervure (34') relie entre elles les branches (24') des crochets (17').

18. Bras d'essuie-glace selon la revendication 17, caractérisé en ce que la nervure (34') s'étend sur toute la longueur (1) des branches (24').

19. Bras d'essuie-glace selon au moins l'une des revendications 6 à 16, caractérisé en ce qu'on a enlevé d'une pièce façonnée de tige d'essuie-glace (40) au moins une région (42) qui présente, dans la direction longitudinale de la tige d'essuie-glace, une longueur environ double de celle que devraient avoir les crochets (17), et en ce que la pièce façonnée (40) a ensuite été divisée dans la ou les régions (42).

20. Bras d'essuie-glace selon l'une des revendications précédentes, caractérisé en ce que le feuillard est un feuillard d'acier.

21. Bras d'essuie-glace selon la revendication 11 et l'une des revendications 10 à 20, caractérisé en ce que la région (29, 31, 31', 38, 42) a été enlevée par découpage.

Fig. 2

Fig. 1

Fig. 5

Fig. 3

Fig. 4

Fig. 6

Fig. 7